# EUROPEAN PATENT SPECIFICATION

(11) **EP 3 771 951 B1**
(45) Date of publication and mention of the grant of the patent: **22.12.2021**
(21) Application number: 20158922.3
(22) Date of filing: 24.02.2020
(51) Int. Cl.: G05B 19/05, G05B 19/418

(54) **USING DATA FROM PLC SYSTEMS AND DATA FROM SENSORS EXTERNAL TO THE PLC SYSTEMS FOR ENSURING DATA INTEGRITY OF INDUSTRIAL CONTROLLERS**
VERWENDUNG VON DATEN AUS SPS-STEUERUNGEN UND DATEN VON SENSOREN AUSSERHALB DER SPS-STEUERUNGEN ZUR GEWÄHRLEISTUNG DER DATENINTEGRITÄT VON INDUSTRIESTEUERUNGEN
UTILISATION DE DATES PROVENANT DES SYSTÈMES PLC ET DE DATES PROVENANT DES SENSORS EXTERNES AUX SYSTÈMES PLC POUR ASSURER L'INTÉGRITÉ DES DONNÉES DES CONTRÔLEURS INDUSTRIELS

(30) Priority: 02.08.2019 US 201916530448
(43) Date of publication of application: 03.02.2021
(73) Proprietor: Hitachi, Ltd., Tokyo 100-8280 (JP)
(72) Inventor: Acharya, Joydeep, Santa Clara, CA 95054 (US); Gaur, Sudhanshu, Santa Clara, CA 95054 (US)
(74) Representative: Manitz Finsterwald Patent- und Rechtsanwaltspartnerschaft mbB

(56) References cited:
- EP-A1- 3 462 260
- WO-A1-2018/048351
- US-A1- 2015 346 706

## Description

### BACKGROUND

### Field

The present disclosure is generally directed to industrial controllers, and more specifically, to artificial intelligence (AI) implementations to ensure data integrity in industrial controllers.

### Related Art

Securing Industrial Control Systems (ICS) can very critical for the safety, reliability and availability of the mission critical operations that they perform. This can be important in the Industrial Internet of Things (IIoT) technology space, when traditionally isolated Operational Technology (OT) and ICS networks are converged with Information Technology (IT) networks, thereby increasing security risks. Examples of such attacks have become more and more common from the Stuxnet attack in Iranian nuclear plants to attack on Ukranian power grids.

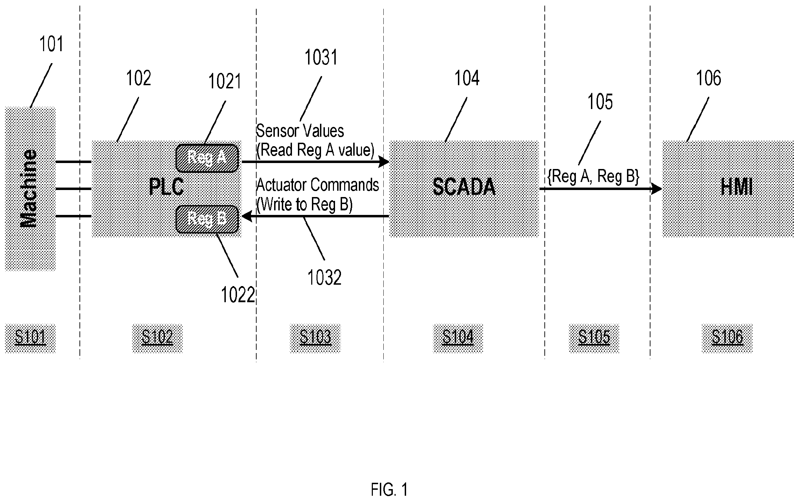

A common method in these attacks is exploiting vulnerabilities in either Programmable Logic Controllers (PLC) and/or Supervisory Control and Data Acquisition (SCADA) systems. FIG. 1 illustrates an example of an ICS System with additional sensors, in accordance with an example implementation. In factories there are a multitude of machines 101 that perform manufacturing processes. The actions of each machine (or group of machines) are controlled by a PLC 102 that issues corresponding commands. Such actions could be turn 'ON' or 'OFF', increase linear velocity of a belt, rotational velocity of a turbine, picking and placing actions of a robotic arm and so on. A PLC also captures sensor information that represent the machine state such as temperature, pressure, count of parts moving along an assembly line and so on. These sensors are internal sensors that are attached to the PLC and part of the ICS network. All such values (sensor and command) are written in memory units called registers (1021 and 1022 respectively) inside the PLCs. A machine command from 1021 would in turn effect the sensor readings in 1022. For example, a sensor would measure non-zero belt velocity after the command to turn in ON is applied.

A SCADA system 104 is a plant-wide software system that can be used to program the PLCs (i.e. issue actuator commands 1032 that will get written in PLC register 1022) and to acquire the data that the PLCs obtain from the machines (for example read data 1031 from PLC register 1021). The SCADA system passes the sensor/actuator value pair 105 (which corresponds to contents of registers 1021 and 1022) to its human machine interface (HMI) 106 where all the information about the factory are displayed for the plant personnel to visualize. For example, if there is some malfunction in the machine, it would be picked up by the internal sensors, written in 1021, conveyed to SCADA via 1031 and displayed in HMI via 105 which can then enable the factory personnel to become aware of the malfunction and then take corrective action.

The above situation describes the normal mode of operation. During an ICS attack or security breach, a malicious adversary can compromise the SCDA and PLC systems. The malicious adversary can hack the system so that the contents displayed on the HMI 106 are different from the true machine state (1021 and 1022). Thus, if there is some malfunction in the machine caused by rogue command(s) 1022, the effects would be picked by 1021 but either signal 1031 (or more likely 105) is corrupted and hence the factory personnel looking at the HMI would not come to know about the issue. This will delay the corrective action and keep the malfunctioning machine operational, which over time can lead to serious operational hazards. Such a situation happened in the Stuxnet attack where a rogue command 1022 instructed the centrifuge machines to spin faster than normal but the true sensor values 1021 to indicate that the centrifuge machines were spinning faster were not provided to the HMI

The core problem is thus ensuring data integrity of an industrial controller - i.e. how to detect if the data (sensor, commands) displayed in the SCADA HMI is what the machine is also observing. There are many instances in the related art that address the above issue. Some related art approaches observe at the IT network and try to introduce methods such as redundancy, network traffic analysis, and so on, to detect anomalous behavior that may be security breaches. Some related art approaches take an OT centric approach and try to detect attack scenarios by deep inspection of OT layer protocols, signaling and messages. However, neither approach can fully detect the type of breach described above. The key to a solution is to fuse multiple data sources (IT, OT, network, internal/external sensors) as not all of the sources would be compromised in an ICS attack and their joint analysis may show up anomalies. Additional related art approach use additional sensor information such as location and network data, but the use cases are more towards identity/access management and specific types of malicious behavior. Such related art approaches define possible attack vectors and analyze potential behavior of various system parameters and try to detect such behavior. Another related art approach correlates PLC data with external sensors S101, S102, S103, S104, S105, and S106 that are not part of the ICS system. The measurements of such sensors could show irregular behavior and anomalies. For example, external sensor S102 could be measuring the same data (or correlated) data as internal sensor value 1021. In event of an ICS breach, the external sensors are not affected. Sensor value 1021 may not be correctly reflected (105) in HMI due to ICS breach but then the reported vales in 105 and S102 would differ, thereby pointing to anomalous behavior.

WO 2018/048351 A1 discloses a system defending against cyber-physical attacks on plural levels. It has a supervisory device implementing SCADA and also refers to a corporate network. US 2015/0346706 A1 discloses smart hardware monitoring and an industrial control system. It performs matching between new measured values and calculated normal data patterns.

EP 3462260 A1 discloses a method for monitoring the state of a production site. A sensor accompanies a product to be manufactured and provides signals that are at least in parts correlated with regular signals from the site.

Though promising, such related art methods are not comprehensive for the following reasons:
1. The behavior of factory systems is complex, and it is impossible to detect anomalies by comparing raw sensor values 1021 and S102 at any instant (or period of time). The anomaly may show up in a complex, non-obvious pattern of values over time.
2. It is very likely that there is no external sensor S102 that will exactly measure the same quantity 1021. The best case scenario involves determining a strong correlation in the probabilistic sense. If so, then comparing raw values does not work anymore.
3. Sensor measurements are noisy and/or sensors may fail and hence there could be many other non-security related reasons as to why 1021 and S102 values not match.

In the present disclosure, example implementations involve an approach to solve the data integrity problem which leverages the power of artificial intelligence (AI) and time series machine learning, which are tools well equipped to handle the problems mentioned above.

### SUMMARY

It is the object of the invention to provide a method, a computer-readable medium and a management apparatus capable of detecting complex operation patterns over time.

This object is accomplished by the features of the independent claims.

### BRIEF DESCRIPTION OF DRAWINGS

FIG. 1 illustrates an example of an ICS System with additional sensors, in accordance with an example implementation.
FIG. 2 illustrates an example system diagram of the AI implementations for an ICS system, in accordance with an example implementation.
FIG. 3 illustrates an example of the space of global external variables, in accordance with an example implementation.
FIG. 4 illustrates an example flow for the factory state determination module, in accordance with an example implementation.
FIG. 5 illustrates an example flow for the factory state determination module when the signal_state is received, in accordance with an example implementation.
FIG. 6 illustrates an example of security analytics module, in accordance with an example implementation.
FIG. 7 illustrates an example flow diagram for the training module of the security analytics module, in accordance with an example implementation.
FIG. 8 illustrates a flow diagram for a test module of the security analytics module, in accordance with an example implementation.
FIG. 9 illustrates an example system architecture of a sensing system and a control system in a factory, in accordance with an example implementation.
FIGS. 10(a) and 10(b) illustrate example management information, in accordance with an example implementation.
FIG. 11 illustrates an example computing environment with an example computer device suitable for use in example implementations.

### DETAILED DESCRIPTION

The following detailed description provides further details of the figures and example implementations of the present application. Reference numerals and descriptions of redundant elements between figures are omitted for clarity. Terms used throughout the description are provided as examples and are not intended to be limiting. For example, the use of the term "automatic" may involve fully automatic or semi-automatic implementations involving user or administrator control over certain aspects of the implementation, depending on the desired implementation of one of ordinary skill in the art practicing implementations of the present application. Selection can be conducted by a user through a user interface or other input means, or can be implemented through a desired algorithm. Example implementations as described herein can be utilized either singularly or in combination and the functionality of the example implementations can be implemented through any means according to the desired implementations.

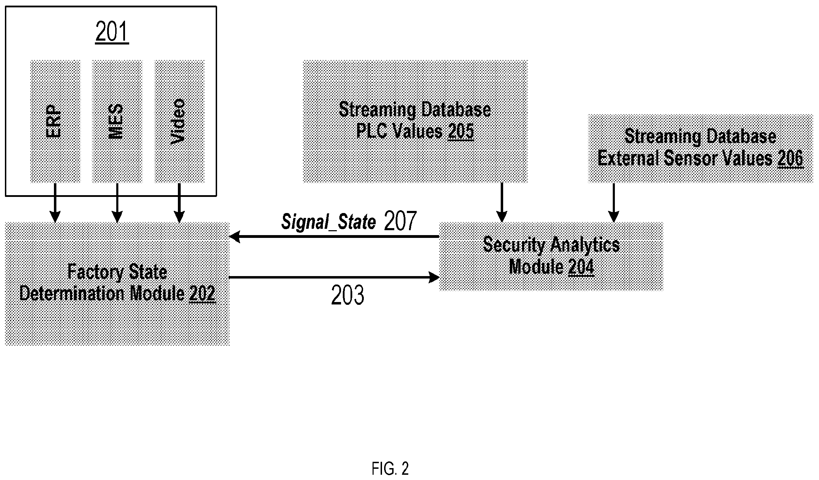

FIG. 2 illustrates an example system diagram of the AI implementations for an ICS system, in accordance with an example implementation. For clarity purposes, the present disclosure uses the concepts of Factory State or Class. In the definition of factory state and class of the present disclosure, a factory may exist in one of several possible high-level states and in each state the operational conditions, labor conditions and statistics of PLC and sensor values are distinct. Examples are as follows:
1. The state is defined by the product being manufactured in the assembly lines. If the product changes from product A to product B, the state also changes. For example, the new product B may have to be built faster than product A (e.g., target higher parts produced per minute) which means that machines operate faster and more workers may be required. This difference thereby corresponds to a new state.
2. The duration of time in which the shift changes in the factory is a new state. In this state, workers from the old shift leave and new workers come in. There is some disruption in operations during this time and thus it qualifies as a new state.
3. Suppose that in a given morning, many workers do not show up. Some machines may be shut down, some production may be stopped or re-routed to different machines. The duration of time for which this condition persists can be labeled as a new state.
4. An important machine breaks down and has to be taken offline for maintenance. Some production is stopped or re-routed to different machines. The duration of time for which this condition persists can be labeled as a new state.

Usually a state will last for a period of time before switching to a new state. Some states will usually re-occur again later either in a regular manner (examples 1 and 2 above) or in an irregular manner (examples 3 and 4 above).

The block diagram of the proposed system is shown in FIG. 2. The system of FIG. 2 has the following components, the high-level descriptions of which are described herein.

There is a factory state determination module 202 which takes its input from all existing data sources 201 in the factory that are not related to machine information (such as PLCs or external sensors). Such existing data sources 201 can include Enterprise Resource Planning (ERP) systems that show procurement delays, changes in sales and operations planning, Manufacturing Execution System (MES) that show the real-time changes in production, shop-floor condition, video analysis results in shop-floor that track worker flow and significant changes therein, and so on in accordance with the desired implementation. Unlike machine information such as PLCs and external sensors, the values of these data sources do not change significantly over short time durations. The factory state determination module 202 computes factory state and passes this information via connection 203 to a security analytics module 204. The security analytics module 204 is attached to the streaming databases that store PLC values 205 and that store external sensor values 206, wherein the security analytics module 204 can access data from both of them. The security analytics module 204 performs security analytics based on these three types of information and passes on the result back to the factory state determination module 202. This result is encapsulated in a data structure called Signal_State 207.

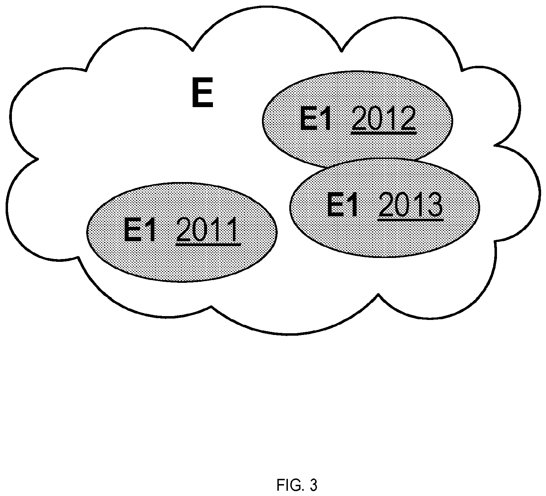

FIG. 3 illustrates an example of the space of global external variables, in accordance with an example implementation. Specifically, FIG. 3 illustrates a conceptual view of the space **E** of all possible states. This space **E** is also a space of all possible outcomes of data sources in 201. A particular state (e.g. 2011, 2012, 2013) is a subset of **E**. Note there some states may overlap (for example the two states given in examples 3 and 4 have a commonality that machines are shut down and these could be the same machines. These could be states E1 and E3). Thus, there may not be a finite number of states and new states may need to be defined. Hence there is no rigorous way to define a state. In the present disclosure, states are therefore described in a qualitative way.

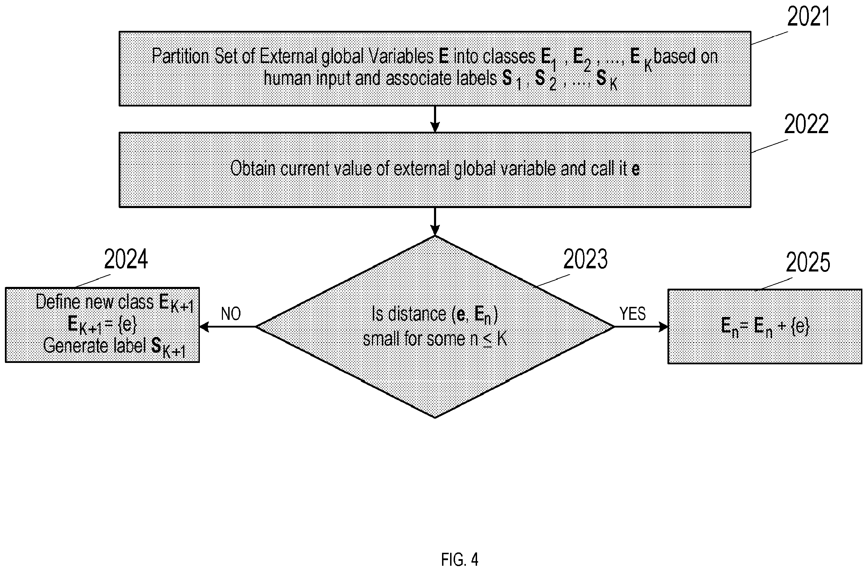

FIG. 4 illustrates an example flow for the factory state determination module, in accordance with an example implementation. The flow of the factory state determination module 202 can be as follows.

At 2021, the module initializes a set of states or classes E₁ to E_{K}. This set of states or classes can be based on human (factory personnel) input, or otherwise depending on the desired implementation. The module assigns a numerical label S₁ to S_{K} for each state for ease of future reference. At 2022, the module obtains the value of current data sources not related to machine information. Call this e. At 2023, the module checks if this value corresponds to a known state amongst E₁ to E_{K}, or is very close to one of these states. This operation of 'checking' can be based on a qualitative judgement in accordance with the desired implementation (e.g., within a set threshold, a probablistic analytics, such as standard deviation, etc.).

If variable e seems to correspond to an existing state Eₙ (Yes), proceed to 2025 add this variable to the existing state Eₙ. To perform this operation, a set of pre-defined rules can be utilized, and the states can be matched as new variables come in, based on the desired implementation. If variable e is indicative of very different conditions than existing states (No), then the process proceeds to 2024 to form a new state E_{K+1}. Depending on the desired implementation, this process can generate a user interface to prompt human input and validation to incorporate a new state.

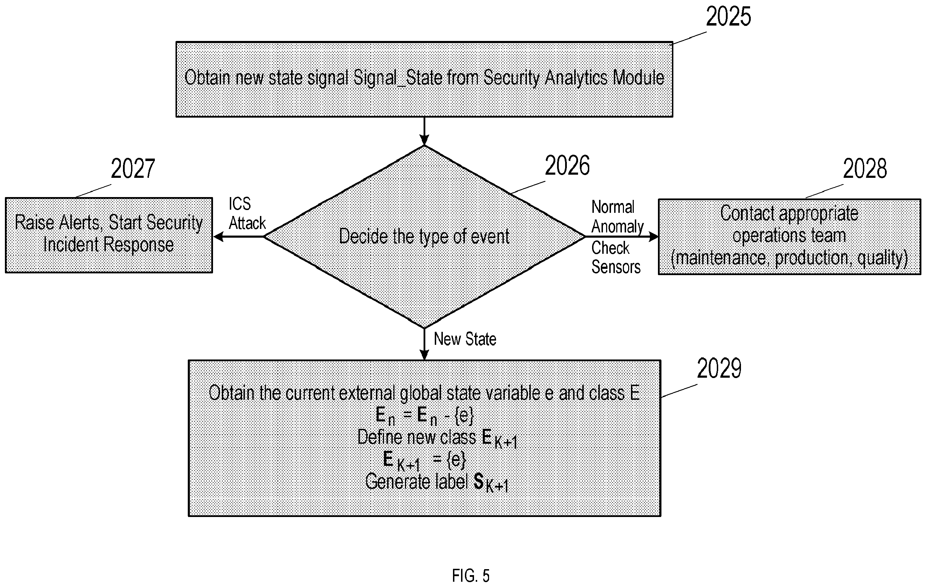

FIG. 5 illustrates an example flow for the factory state determination module when the signal state is received, in accordance with an example implementation. The factory state determination module 202 also performs various functionalities based on feedback Signal_State 203 from the security analytics module 204. The flow of FIG. 5 is as follows.

At 2025, the module receives the signal signal_state 207 and processes the signal to determine its type at 2026. The processing can be conducted based on algorithms constructed to process signal state in accordance with the desired implementation, or can be provided for human interpretation via a user interface. If the value is 'Check Sensors' or 'Normal Anomaly', then this indicates that there is some normal operational issues with machines ('Normal Anomaly') or the external sensors are malfunctioning ('Check Sensors'). In this case, the process proceeds to 2028 to notify the relevant operations team in the factory to address such issues. Such process can involve dispatching preset instructions based on the type of event. The definitions of 'Check Sensors' and 'Normal Anomaly' is described with respect to the functionalities of the security analytics module 204.

If the value is 'New State', then the process proceeds to 2029 as the value indicates that the combination of statistics of the PLC and external sensors have detected the presence of a new state that was not recorded before. In that case, the module stores the current variable e containing information about data sources not related to machine information as a new state.

If the value is 'ICS attack', then the process proceeds to 2027 to take action accordingly.

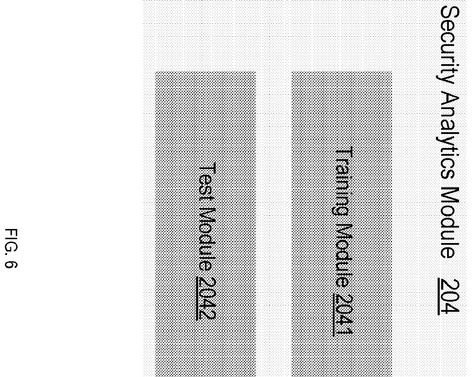

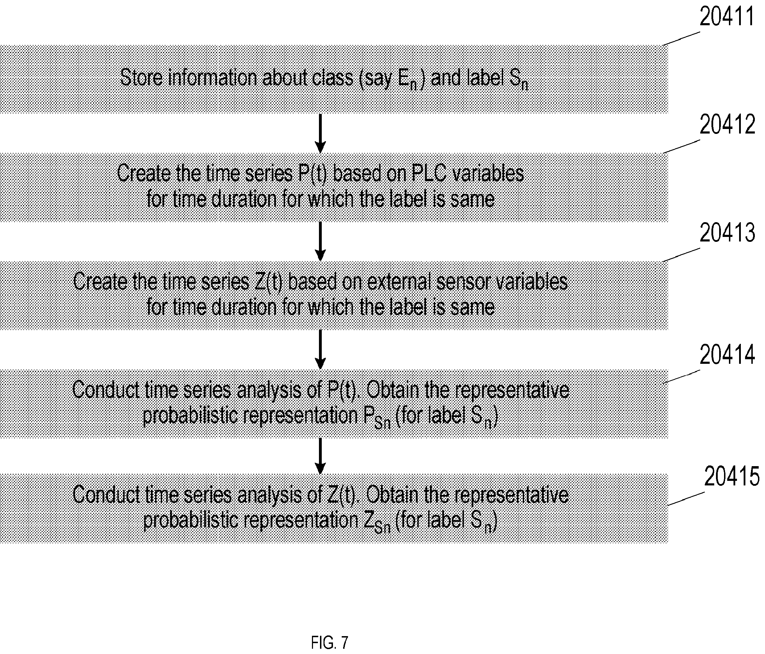

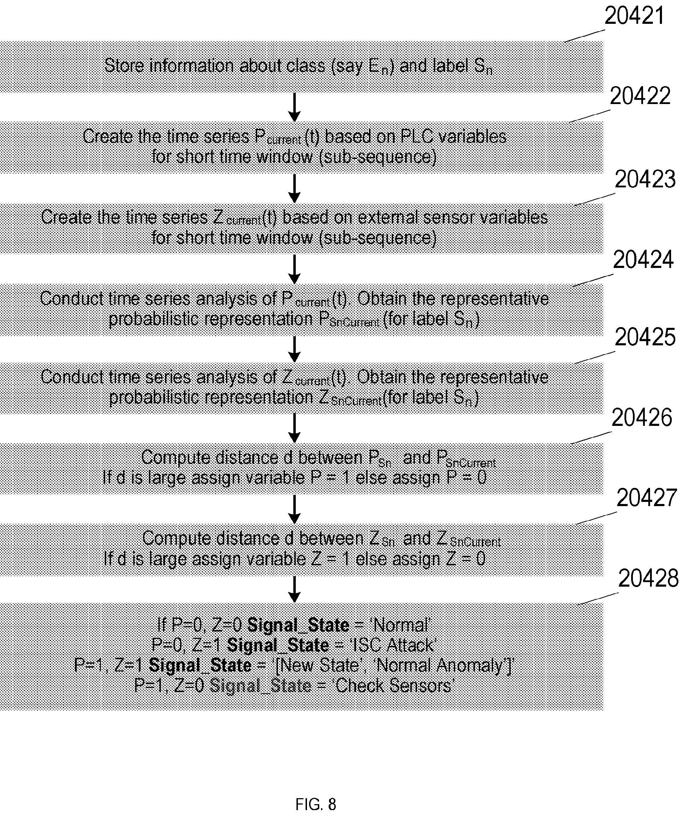

FIG. 6 illustrates an example of Security Analytics module 204, in accordance with an example implementation. As illustrated in FIG. 6, security analytics module 204 involves two submodules; the training module 2041 and test module 2042. Further details of each module are described with respect to FIGS. 7 and 8.

FIG. 7 illustrates an example flow diagram for the training module of the security analytics module, in accordance with an example implementation. The training module 2041 can execute the following flow.

At 20411, the module stores the information regarding the current class and label. At 20412, the module observes all PLC variables and forms the time series P(t). If the class changes in the process at 20411, then the process forms a new time series for that class. At 20413, the module observes all external sensor variables and forms the time series Z(t). If the class changes in the process at 20411, then the module forms a new time series for that class.

At 20414, the module conducts probabilistic analytics, such as standard time series analysis (e.g., according to any method known to one of ordinary skill in the art) on P(t) to obtain its probabilistic representation P_{Sn}. This could be a mathematical function of multiple variables. The module labels the probabilistic representation with the label of the current class. As new time series values are received (for the same class), the module updates and improves the nature of P_{Sn}.

At 20415, the module conducts probabilistic analytics, such as standard time series analysis on Z(t) to obtain its probabilistic representation Z_{Sn}. This could be a mathematical function of multiple variables. The module labels the probabilistic representation with the label of the current class. As new time series values are received (for the same class), the module updates and improves the nature of Z_{Sn}.

FIG. 8 illustrates a flow diagram for a test module of the security analytics module, in accordance with an example implementation. The test module 2042 is configured to execute the flow as follows.

At 20421, the module stores the information about the current class and label. At 20422, the module observes all PLC variables and forms the time series P_{current}(t). This analysis is done for a short time window or sub-sequence as the algorithm tries to detect events (anomalies or attacks) over the window. At 20423, the module observes all external sensor variables and forms the time series Z_{current}(t). This analysis is done for a short time window or sub-sequence as the algorithm tries to detect events (anomalies or attacks) over the window. At 20424, the module conducts probabilistic analytics, such as standard time series analysis (e.g., according to any method known to one of ordinary skill in the art) on P_{current}(t) to obtain its probabilistic representation P_{SnCurrent}. This could be a mathematical function of multiple variables. The module labels the probabilistic representation with the label of the current class.

At 20425, the module conducts probabilistic analytics, such as standard time series analysis (e.g., according to any method known to one of ordinary skill in the art) on Z_{current}(t) to obtain its probabilistic representation Z_{SnCurrent}. This could be a mathematical function of multiple variables. The module labels the probabilistic representation with the label of the current class.

At 20426, the module computes the distance (e.g., in a probabilistic sense according to any desired implementation known in the art) between P_{SnCurrent} from the process at 20424 and P_{Sn} from the process at 20414. Define variable P. If the distance is large (e.g., meets a threshold set in accordance with a desired implementation), then the module assigns P = 1, else the module assigns P = 0. This process shows that there is significant statistical difference in the behavior of the PLC variables when it is assumed apiori that the factory is in a certain class.

At 20427, compute the distance (e.g., in a probabilistic sense according to any desired implementation known in the art) between Z_{SnCurrent} from the process at 20425 and Z_{Sn} from the process at 20415. Define variable Z. If the distance is large (e.g., meets a threshold set in accordance with a desired implementation), then the module assigns Z = 1, else the module assigns Z = 0. This process shows that there is significant statistical difference in the behavior of the external sensor variables when it is assumed apiori that the factory is in a certain class.

### At 20428, the process performs the following operations

a. If P = 0 and Z = 0, it means that the expected statistical behavior of both PLC and external sensors is as expected. This is a normal event. The module assigns the signal state accordingly (e.g., as a normal event).

b. If P = 0 and Z = 1, it means that the expected statistical behavior of PLC is expected but the behavior of the external sensors is not. This is indicative of an ICS attack which is affecting data integrity of the PLC variables being reported to SCADA. The module assigns the signal_state accordingly (e.g., as ICS attack).

c. If P = 1 and Z = 1, it means that the statistical behavior of both PLC and external sensors are not as per expectation. This could be a normal anomaly (such as machine breakdown). It is also possible that the basic assumption of system state is incorrect, and a new state needs to be defined in the Factory State Determination module 202. The module assigns signal_state accordingly (e.g., normal anomaly or new state as determined by user input through a human interface or an algorithmic process in accordance with a desired implementation).

d. If P = 1 and Z = 0, it means that the expected statistical behavior of sensors is expected but the behavior of the PLC sensors is not. The latter points to machine event which should have been picked by the former and thus most probably means some malfunctioning in external sensors. The module assigns signal state accordingly (e.g., check sensors).

The example implementations described herein can thereby provide manufacturing context-dependent segmentation of the time series into different states which a factory can be in, and find the mathematical representations separately for each class. Such example implementations improve the accuracy over the case when this context dependent knowledge was not used. This is because time series approaches (e.g., as known in the related art) that derive probabilistic functions work well if the underlying distributions are stationary, which is not the case between different states. Further, the example implementations use the PLC sequence and external sensor sequence separately to be able to distinguish between a wide range of outcomes as shown in the process at 20428.

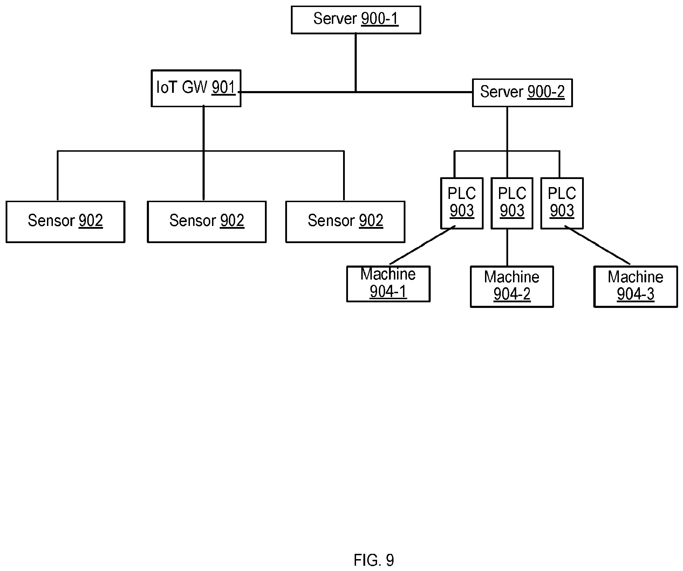

FIG. 9 illustrates an example system architecture of a sensing system and a control system in a factory, in accordance with an example implementation. In this example system architecture, IoT gateway (GW) 901 controls data gathering from one or more sensors 902 in a synchronous manner, and server 900-2 organizes one or more PLCs 903 connected with each corresponding machine 904-1, 904-2, 904-3. Server 900-2 can not only control the behavior of each machine 904-1, 904-2, 904-3, but also collect PLC values regarding the operations of each machine 904-1, 904-2, 904-3 in a synchronous manner. Therefore, in the example system illustrated in FIG. 9, server 900-1 obtains synchronous values from the sensors 902 and from the PLCs 903. In such a configuration, server 900-1 operates as a management apparatus to manage sensors through IoT GW 901, and PLCs 903 and machine operations through server 900-2.

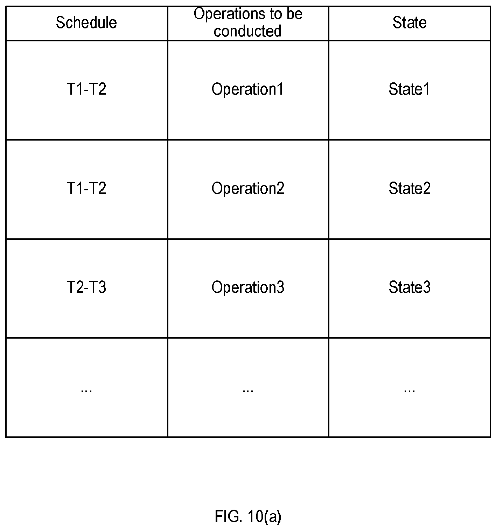

To maintain security, the network of the factory itself is managed by server 900-2, which manages the PLCs 903 controlling the underlying machines 904-1, 904-2, 904-3. Server 900-2 can receive a schedule from server 900-1 over a separate network from the factory network as illustrated in FIG. 10(a), and then instruct the PLCs 903 to control the machines 904-1, 904-2, and 904-3 to execute the operations according to the schedule set forth in FIG. 10(a). Sensors 902 are associated with one or more of the machines 904-1, 904-2, 904-3, and are connected to a network that is separate from the factory network for security reasons. This network is managed by IoT GW 901. Server 900-2 streams PLC values with associated timestamps to server 900-1, whereas IoT GW 901 streams sensor values with associated timestamps to server 900-1, whereupon server 900-1 synchronizes the PLC values and the sensor values accordingly based on the timestamp.

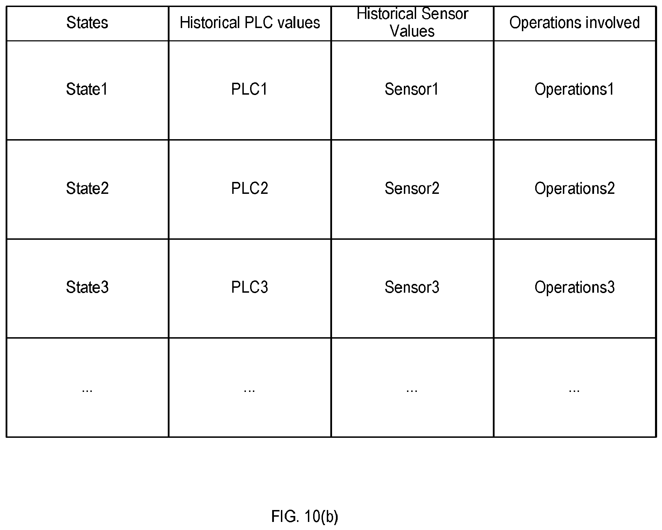

FIGS. 10(a) and 10(b) illustrate example management information, in accordance with an example implementation. Specifically, FIG. 10(a) illustrates an example of scheduling of operations of the factory, which can include the scheduled time period, the operations to be conducted during the scheduled time period, and the expected state derived from the operations to be conducted. From the information of FIG. 10(a), the current operating conditions can thereby be determined for the factory based on the current time and the scheduled operations for the current time. FIG. 10(b) illustrates an example of managing states with historical PLC values and historical sensor values. Each previously measured state can be associated with corresponding historical PLC values and historical sensor values, along with the operations involved in the factory when the state was detected.

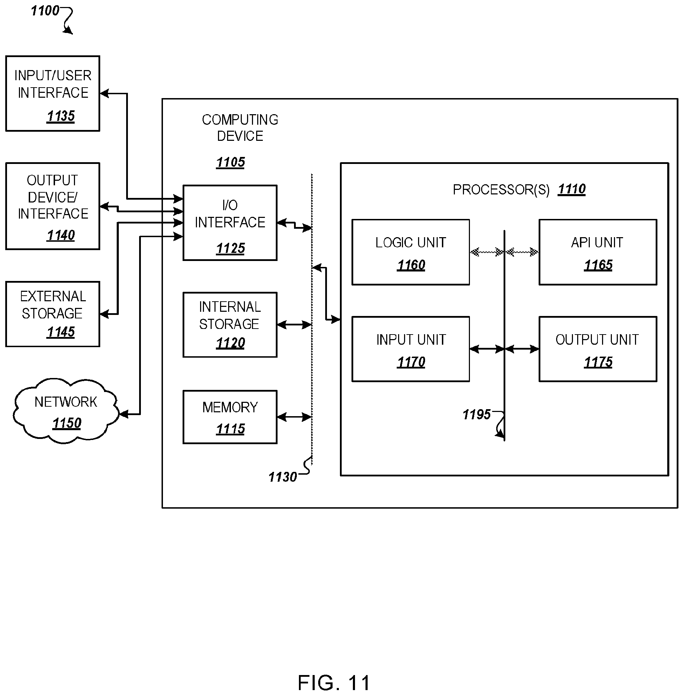

FIG. 11 illustrates an example computing environment with an example computer device suitable for use in example implementations, such as server 900-1 or 900-2 of FIG. 9. Computer device 1105 in computing environment 1100 can include one or more processing units, cores, or processors 1110, memory 1115 (e.g., RAM, ROM, and/or the like), internal storage 1120 (e.g., magnetic, optical, solid state storage, and/or organic), and/or I/O interface 1125, any of which can be coupled on a communication mechanism or bus 1130 for communicating information or embedded in the computer device 1105.

Computer device 1105 can be communicatively coupled to input/user interface 1135 and output device/interface 1140. Either one or both of input/user interface 1135 and output device/interface 1140 can be a wired or wireless interface and can be detachable. Input/user interface 1135 may include any device, component, sensor, or interface, physical or virtual, that can be used to provide input (e.g., buttons, touch-screen interface, keyboard, a pointing/cursor control, microphone, camera, braille, motion sensor, optical reader, and/or the like). Output device/interface 1140 may include a display, television, monitor, printer, speaker, braille, or the like. In some example implementations, input/user interface 1135 and output device/interface 1140 can be embedded with or physically coupled to the computer device 1105. In other example implementations, other computer devices may function as or provide the functions of input/user interface 1135 and output device/interface 1140 for a computer device 1105. In example implementations involving a touch screen display, a television display, or any other form of display, the display is configured to provide a user interface.

Examples of computer device 1105 may include, but are not limited to, highly mobile devices (e.g., smartphones, devices in vehicles and other machines, devices carried by humans and animals, and the like), mobile devices (e.g., tablets, notebooks, laptops, personal computers, portable televisions, radios, and the like), and devices not designed for mobility (e.g., desktop computers, other computers, information kiosks, televisions with one or more processors embedded therein and/or coupled thereto, radios, and the like).

Computer device 1105 can be communicatively coupled (e.g., via I/O interface 1125) to external storage 1145 and network 1150 for communicating with any number of networked components, devices, and systems, including one or more computer devices of the same or different configuration. Computer device 1105 or any connected computer device can be functioning as, providing services of, or referred to as a server, client, thin server, general machine, special-purpose machine, or another label.

I/O interface 1125 can include, but is not limited to, wired and/or wireless interfaces using any communication or I/O protocols or standards (e.g., Ethernet, 802.11x, Universal System Bus, WiMax, modem, a cellular network protocol, and the like) for communicating information to and/or from at least all the connected components, devices, and network in computing environment 1100. Network 1150 can be any network or combination of networks (e.g., the Internet, local area network, wide area network, a telephonic network, a cellular network, satellite network, and the like).

Computer device 1105 can use and/or communicate using computer-usable or computer-readable media, including transitory media and non-transitory media. Transitory media include transmission media (e.g., metal cables, fiber optics), signals, carrier waves, and the like. Non-transitory media include magnetic media (e.g., disks and tapes), optical media (e.g., CD ROM, digital video disks, Blu-ray disks), solid state media (e.g., RAM, ROM, flash memory, solid-state storage), and other non-volatile storage or memory.

Computer device 1105 can be used to implement techniques, methods, applications, processes, or computer-executable instructions in some example computing environments. Computer-executable instructions can be retrieved from transitory media, and stored on and retrieved from non-transitory media. The executable instructions can originate from one or more of any programming, scripting, and machine languages (e.g., C, C++, C#, Java, Visual Basic, Python, Perl, JavaScript, and others).

Processor(s) 1110 can execute under any operating system (OS) (not shown), in a native or virtual environment. One or more applications can be deployed that include logic unit 1160, application programming interface (API) unit 1165, input unit 1170, output unit 1175, and inter-unit communication mechanism 1195 for the different units to communicate with each other, with the OS, and with other applications (not shown). The described units and elements can be varied in design, function, configuration, or implementation and are not limited to the descriptions provided. Processor(s) 1110 can be in the form of physical processors or central processing units (CPU) that is configured to execute instructions loaded from Memory 1115.

In some example implementations, when information or an execution instruction is received by API unit 1165, it may be communicated to one or more other units (e.g., logic unit 1160, input unit 1170, output unit 1175). In some instances, logic unit 1160 may be configured to control the information flow among the units and direct the services provided by API unit 1165, input unit 1170, output unit 1175, in some example implementations described above. For example, the flow of one or more processes or implementations may be controlled by logic unit 1160 alone or in conjunction with API unit 1165. The input unit 1170 may be configured to obtain input for the calculations described in the example implementations, and the output unit 1175 may be configured to provide output based on the calculations described in example implementations.

Memory 1115 is configured to store management information as illustrated in FIGS. 10(a) and 10(b), wherein processor(s) 1110 is configured to execute processes to facilitate the functionality of server 900-1 or 900-2 based on the management information. For example, processor(s) 1110 can be configured to transmit the scheduling information of FIG. 10(a) to server 900-2, or instruct PLCs 903 to control machines to conduct operations in accordance with the schedule.

Processor(s) 1110 can be configured to for a state of a factory determined from current operating conditions of the factory based on management information of FIG. 10(a), receive streaming PLC values from the PLCs and streaming external sensor values from the plurality of sensors in the factory connected externally to the network as illustrated in FIG. 7 and FIG. 9; conduct probabilistic analytics on the streaming PLC values and streaming external sensor values against historical PLC values and historical sensor values associated with the state of the factory as illustrated in FIG. 7 and FIG. 8; and for the probabilistic analytics indicative of the streaming PLC values being within expectation for the state, and the streaming external sensor values not being within expectation for the state, providing an indication of a security incident, as illustrated at 20428 of FIG. 8 for ICS attack. Examples of providing an indication are shown at 2027 of FIG. 5, which can include raising alerts and executing preset instructions for a security incident response (e.g., shutting down corresponding PLCs and machines, etc.), as well as providing an indication on a user interface in accordance with the desired implementation. Through such example implementations, ICS attacks on a factory floor can be detected by a management apparatus, even if the PLC values obtained appear to indicate that the factory is operating normally.

Processor(s) 1110 can be configured to, for the probabilistic analytics indicative of the streaming PLC values not being within expectation for the state, and the streaming external sensor values not being within expectation for the state, detect one of a new state and a factory event as illustrated at 20428 of FIG. 8 for a new state/normal anomaly, and as illustrated at 2026 and 2028 of FIG. 5.

Processor(s) 1110 can be configured to, for the detecting being indicative of the new state, store the streaming PLC values and the streaming external sensor values as the historical PLC values and the historical sensor values for the new state as illustrated in 2026 and 2029 of FIG. 5 and FIG. 10(b).

Processor(s) 1110 can be configured to for the probabilistic analytics indicative of the streaming PLC values not being within expectation for the state, and the streaming external sensor values being within expectation for the state, providing an indication of sensor failure as illustrated at 2026 and 2028 of FIG. 5, and as illustrated at 20428 of FIG. 8 for Check Sensors.

Processor(s) 1110 can be configured to select the state from a plurality of states as illustrated in FIG. 10(b), each state associated with corresponding historical sensor and PLC values, and associated with operations of the factory as illustrated in FIG. 8.

Through the example system of FIG. 9 and the example implementations as described in FIG. 11, a management apparatus can manage a sensor system on a network separate from a PLC/machine system on a factory network of the factory, and detect ICS attacks occurring on the factory based on the streaming PLC values and the sensor values, thereby improving security for the factory floor.

Some portions of the detailed description are presented in terms of algorithms and symbolic representations of operations within a computer. These algorithmic descriptions and symbolic representations are the means used by those skilled in the data processing arts to convey the essence of their innovations to others skilled in the art. An algorithm is a series of defined steps leading to a desired end state or result. In example implementations, the steps carried out require physical manipulations of tangible quantities for achieving a tangible result.

Unless specifically stated otherwise, as apparent from the discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

Example implementations may also relate to an apparatus for performing the operations herein. This apparatus may be specially constructed for the required purposes, or it may include one or more general-purpose computers selectively activated or reconfigured by one or more computer programs. Such computer programs may be stored in a computer readable medium, such as a computer-readable storage medium or a computer-readable signal medium. A computer-readable storage medium may involve tangible mediums such as, but not limited to optical disks, magnetic disks, read-only memories, random access memories, solid state devices and drives, or any other types of tangible or non-transitory media suitable for storing electronic information. A computer readable signal medium may include mediums such as carrier waves. The algorithms and displays presented herein are not inherently related to any particular computer or other apparatus. Computer programs can involve pure software implementations that involve instructions that perform the operations of the desired implementation.

Various general-purpose systems may be used with programs and modules in accordance with the examples herein, or it may prove convenient to construct a more specialized apparatus to perform desired method steps. In addition, the example implementations are not described with reference to any particular programming language. It will be appreciated that a variety of programming languages may be used to implement the teachings of the example implementations as described herein. The instructions of the programming language(s) may be executed by one or more processing devices, e.g., central processing units (CPUs), processors, or controllers.

As is known in the art, the operations described above can be performed by hardware, software, or some combination of software and hardware. Various aspects of the example implementations may be implemented using circuits and logic devices (hardware), while other aspects may be implemented using instructions stored on a machine-readable medium (software), which if executed by a processor, would cause the processor to perform a method to carry out implementations of the present application. Further, some example implementations of the present disclosure may be performed solely in hardware, whereas other example implementations may be performed solely in software. Moreover, the various functions described can be performed in a single unit, or can be spread across a number of components in any number of ways. When performed by software, the methods may be executed by a processor, such as a general purpose computer, based on instructions stored on a computer-readable medium. If desired, the instructions can be stored on the medium in a compressed and/or encrypted format.

Features described in this specification and the claims or shown in a figure shall be deemed combinable with and amongst each other also if their combination is not expressly described, to the extent that the combination is technically feasible. Features described in a certain context, embodiment, figure or claim shall be deemed separable from this claim, context, embodiment or figure and shall be deemed combinable with every other figure, claim, context or embodiment, to the extent that it is technically feasible. Embodiments and figures shall not be understood as being meant necessarily exclusive against each other. Descriptions of a method or procedure or a method step or a procedural step shall be understood also as description of means and/or possibly program instructions of executable code on a data carrier adapted for implementing the method or procedure or method step or procedural step, and vice versa.

Moreover, other implementations of the present disclosure will be apparent to those skilled in the art from consideration of the specification and practice of the teachings of the present disclosure. Various aspects and/or components of the described example implementations may be used singly or in any combination. It is intended that the specification and example implementations be considered as examples only, with the true scope of the present disclosure being indicated by the following claims.

## Claims

1. A method, comprising:
for a state of a factory determined from current operating conditions of the factory:
receiving (20422) streaming Programmable Logic Controller (PLC) values from PLCs (903) on a network of the factory, and receiving (20423) streaming external sensor values from sensors (902) in the factory connected externally to the network;
conducting (20424, 20425) probabilistic analytics on the streaming PLC values and streaming external sensor values against historical PLC values and historical external sensor values associated with the state of the factory; and
providing an indication of a security incident when the probabilistic analytics indicative of the streaming PLC values is within expectation for the state and the streaming external sensor values are not within expectation for the state,,
detecting one of a new state and a factory event when the probabilistic analytics indicative of the streaming PLC values is not within expectation for the state and the streaming external sensor values are not within expectation for the state, and
when the detection is indicative of a new state, storing the streaming PLC values and the streaming external sensor values as the historical PLC values and the historical external sensor values for the new state.

2. The method of claim 1, further comprising indicating a sensor failure when the probabilistic analytics indicative of the streaming PLC values are not within expectation for the state and the streaming external sensor values are within expectation for the state.

3. The method of claim 1, wherein the state is selected from a plurality of states, each state associated with corresponding historical external sensor values and historical PLC values, and associated with operations of the factory.

4. A non-transitory computer readable medium, storing instructions for executing a process configured for implementing the method of one of the claims 1 to 3.

5. A management apparatus configured to manage a plurality of programmable logic controllers (PLCs) (903) on a network of a factory and a plurality of sensors (902) connected to the management apparatus externally from the network, the management apparatus comprising:
a processor, configured to:
for a state of a factory determined from current operating conditions of the factory:
receive (20422) streaming PLC values from the PLCs (903) and receive (20423) streaming external sensor values from the plurality of sensors (902) in the factory connected externally to the network;
conduct (20424, 20425) probabilistic analytics on the streaming PLC values and streaming external sensor values against historical PLC values and historical external sensor values associated with the state of the factory; and
provide an indication of a security incident when the probabilistic analytics indicative of the streaming PLC values is within expectation for the state and the streaming external sensor values is not within expectation for the state,
detect one of a new state and a factory event when the probabilistic analytics indicative of the streaming PLC values are not within expectation for the state and the streaming external sensor values are not within expectation for the state,, and
when the detection is indicative of the new state, store the streaming PLC values and the streaming external sensor values as the historical PLC values and the historical external sensor values for the new state.

6. The apparatus of claim 5, the processor further configured to provide an indication of a sensor failure when the probabilistic analytics indicative of the streaming PLC values are not within expectation for the state and the streaming external sensor values are within expectation for the state.

7. The apparatus of claim 5, wherein the state is selected from a plurality of states, each state associated with corresponding historical external sensor values and historical PLC values, and associated with operations of the factory.

## Patentansprüche

1. Verfahren, das umfasst:
für einen Zustand einer Fabrik, der aus aktuellen Betriebsbedingungen der Fabrik bestimmt wird:
Empfangen (20422) von Streaming-Werten von speicherprogrammierbaren Steuerungen (SPSsen) von SPSsen (903) in einem Netzwerk der Fabrik, und Empfangen (20423) von Streaming-Werten von externen Sensoren von Sensoren (902) in der Fabrik, die extern mit dem Netzwerk verbunden sind;
Durchführen (20424, 20425) probabilistischer Analysen an den Streaming-Werten von den SPSsen und den Streaming-Werten von den externen Sensoren gegen historische SPS-Werte und historische externe Sensorwerte, die mit dem Zustand der Fabrik verknüpft sind; und
Bereitstellen eines Hinweises auf einen Sicherheitsvorfall, wenn die probabilistischen Analysen, die die Streaming-Werte von den SPSsen anzeigen, den Zustand erwarten und die Streaming-Werte von den externen Sensoren den Zustand nicht erwarten,
Erkennen entweder eines neuen Zustands oder eines Fabrikereignisses, wenn die probabilistischen Analysen, die die Streaming-Werte von den SPSsen anzeigen, den Zustand nicht erwarten und die Streaming-Werte von den externen Sensoren den Zustand nicht erwarten, und
wenn die Erkennung einen neuen Zustand anzeigt, Speichern der Streaming-Werte von den SPSsen und der Streaming-Werte von den externen Sensoren als die historischen SPS-Werte und die historischen externen Sensorwerte für den neuen Zustand.

2. Verfahren nach Anspruch 1, das ferner das Anzeigen eines Sensorfehlers umfasst, wenn die probabilistischen Analysen, die die Streaming-Werte von den SPSsen anzeigen, den Zustand nicht erwarten und die Streaming-Werte von den externen Sensoren den Zustand erwarten.

3. Verfahren nach Anspruch 1, wobei der Zustand aus einer Vielzahl von Zuständen ausgewählt wird, wobei jeder Zustand mit entsprechenden historischen externen Sensorwerten und historischen SPS-Werten verknüpft ist, und mit Vorgängen in der Fabrik verknüpft ist.

4. Nicht-transitorisches computerlesbares Medium, das Befehle zum Ausführen eines Prozesses speichert, der zum Implementieren des Verfahrens nach einem der Ansprüche 1 bis 3 konfiguriert ist.

5. Verwaltungsvorrichtung, die konfiguriert ist, um eine Vielzahl von speicherprogrammierbaren Steuerungen (SPSsen) (903) in einem Netzwerk einer Fabrik und eine Vielzahl von Sensoren (902), die mit der Verwaltungsvorrichtung außerhalb des Netzwerks verbunden sind, zu verwalten, wobei die Verwaltungsvorrichtung umfasst:
einen Prozessor, der so konfiguriert ist, dass er:
für einen Zustand einer Fabrik, der aus aktuellen Betriebsbedingungen der Fabrik bestimmt wird:
Streaming-Werte von SPSsen von den SPSsen (903) empfängt (20422) und Streaming-Werte von externen Sensoren von der Vielzahl von Sensoren (902) in der Fabrik, die extern mit dem Netzwerk verbunden sind, empfängt (20423);
probabilistische Analysen an den Streaming-Werten von den SPSsen und den Streaming-Werten von den externen Sensoren gegen historische SPS-Werte und historische externe Sensorwerte, die mit dem Zustand der Fabrik verknüpft sind, durchführt (20424, 20425); und
einen Hinweis auf einen Sicherheitsvorfall bereitstellt, wenn die probabilistischen Analysen, die die Streaming-Werte von den SPSsen anzeigen, den Zustand erwarten und die Streaming-Werte von den externen Sensoren den Zustand nicht erwarten,
entweder einen neuen Zustand oder ein Fabrikereignis erkennt, wenn die probabilistischen Analysen, die die Streaming-Werte von den SPSsen anzeigen, den Zustand nicht erwarten und die Streaming-Werte von den externen Sensoren den Zustand nicht erwarten, und
wenn die Erkennung auf den neuen Zustand hinweist, die Streaming-Werte von den SPSsen und die Streaming-Werte von den externen Sensoren als die historischen SPS-Werte und die historischen externen Sensorwerte für den neuen Zustand speichert.

6. Vorrichtung nach Anspruch 5, wobei der Prozessor ferner so konfiguriert ist, dass er einen Hinweis auf einen Sensorausfall bereitstellt, wenn die probabilistischen Analysen, die die Streaming-Werte von den SPSsen anzeigen, den Zustand nicht erwarten und die Streaming-Werte von den externen Sensoren den Zustand erwarten.

7. Vorrichtung nach Anspruch 5, wobei der Zustand aus einer Vielzahl von Zuständen ausgewählt wird, wobei jeder Zustand mit entsprechenden historischen externen Sensorwerten und historischen SPS-Werten verknüpft ist und mit Vorgängen in der Fabrik verknüpft ist.

## Revendications

1. Procédé comprenant,
pour un état d'une usine déterminé à partir de conditions de fonctionnement actuelles de l'usine, les étapes consistant à :
recevoir (20422) des valeurs de contrôleurs logiques programmables (PLC) transmises en continu par des PLC (903) sur un réseau de l'usine, et recevoir (20423) des valeurs de capteurs externes transmises en continu par des capteurs (902) dans l'usine qui sont connectés de manière externe au réseau ;
effectuer (20424, 20425) une analyse probabiliste sur les valeurs de PLC transmises en continu et les valeurs de capteurs externes transmises en continu par rapport à des valeurs de PLC historiques et des valeurs de capteurs externes historiques associées à l'état de l'usine ; et
fournir une indication d'un incident de sécurité lorsque l'analyse probabiliste indicative des valeurs de PLC transmises en continu est conforme aux attentes pour l'état et que les valeurs de capteurs externes transmises en continu ne sont pas conformes aux attentes pour l'état,
détecter l'un d'un nouvel état et d'un événement d'usine lorsque l'analyse probabiliste indicative des valeurs de PLC transmises en continu n'est pas conforme aux attentes pour l'état et que les valeurs de capteurs externes transmises en continu ne sont pas conformes aux attentes pour l'état, et
lorsque la détection est indicative d'un nouvel état, stocker les valeurs de PLC transmises en continu et les valeurs de capteurs externes transmises en continu en tant que valeurs de PLC historiques et valeurs de capteurs externes historiques pour le nouvel état.

2. Procédé selon la revendication 1, comprenant en outre l'étape consistant à indiquer une défaillance de capteur lorsque l'analyse probabiliste indicative des valeurs de CPL transmises en continu ne sont pas conformes aux attentes pour l'état et les valeurs de capteurs externes transmises en continu sont conformes aux attentes pour l'état.

3. Procédé selon la revendication 1, dans lequel l'état est sélectionné parmi une pluralité d'états, chaque état étant associé à des valeurs de capteurs externes historiques et à des valeurs de PLC historiques correspondantes, et associé à des opérations de l'usine.

4. Support non transitoire lisible par ordinateur, stockant des instructions pour exécuter un processus configuré pour mettre en œuvre le procédé selon l'une des revendications 1 à 3.

5. Appareil de gestion configuré pour gérer une pluralité de contrôleurs logiques programmables (PLC) (903) sur un réseau d'une usine et une pluralité de capteurs (902) connectés à l'appareil de gestion de manière externe au réseau, l'appareil de gestion comprenant :
un processeur, configuré pour :
pour un état d'une usine déterminé à partir de conditions de fonctionnement actuelles de l'usine :
recevoir (20422) des valeurs de PLC transmises en continu par les PLC (903) et recevoir (20423) des valeurs de capteurs externes transmises en continu par la pluralité de capteurs (902) dans l'usine qui sont connectés de manière externe au réseau ;
effectuer (20424, 20425) une analyse probabiliste sur les valeurs de PLC transmises en continu et les valeurs de capteurs externes transmises en continu par rapport à des valeurs de PLC historiques et des valeurs de capteurs externes historiques associées à l'état de l'usine ; et
fournir une indication d'un incident de sécurité lorsque l'analyse probabiliste indicative des valeurs de PLC transmises en continu est conforme aux attentes pour l'état et que les valeurs de capteurs externes transmises en continu ne sont pas conformes aux attentes pour l'état,
détecter l'un d'un nouvel état et d'un événement d'usine lorsque l'analyse probabiliste indicative des valeurs de PLC transmises en continu ne sont pas conformes aux attentes pour l'état et les valeurs de capteurs externes transmises en continu ne sont pas conformes aux attentes pour l'état, et
lorsque la détection est indicative du nouvel état, stocker les valeurs de PLC transmises en continu et les valeurs de capteurs externes transmises en continu en tant que valeurs de PLC historiques et valeurs de capteurs externes historiques pour le nouvel état.

6. Appareil selon la revendication 5, le processeur étant en outre configuré pour fournir une indication d'une défaillance de capteur lorsque l'analyse probabiliste indicative des valeurs PLC transmises en continu ne sont pas conformes aux attentes pour l'état et que les valeurs de capteurs externes transmises en continu sont conformes aux attentes pour l'état.

7. Appareil selon la revendication 5, dans lequel l'état est sélectionné parmi une pluralité d'états, chaque état étant associé à des valeurs de capteurs externes historiques et à des valeurs de PLC historiques correspondantes, et associé à des opérations de l'usine.
